# EUROPÄISCHE PATENTANMELDUNG

(11) **EP 3 203 376 A1**
(43) Veröffentlichungstag der Anmeldung: **09.08.2017**
(21) Anmeldenummer: 16154002.6
(22) Anmeldetag: 03.02.2016
(51) Int. Cl.: G06F 11/26

(54) **COMPUTERIMPLEMENTIERTES VERFAHREN ZUR SIMULATION EINES RESTBUS-STEUERGERÄTEVERBUNDES**

(71) Anmelder: dSPACE digital signal processing and control engineering GmbH, 33102 Paderborn (DE)
(72) Erfinder: Blesken, Dr. Matthias, 33098 Paderborn (DE); Hötger, Martin, 33181 Bad Wünnenberg (DE); Müller, Björn, 33106 Paderborn (DE)

(57) **Zusammenfassung**

Beschrieben und dargestellt ist ein computerimplementiertes Verfahren (1) zur Simulation eines Restbus-Steuergeräteverbundes (2), wobei der Restbus-Steuergeräteverbund (2) mindestens zwei über ein Bussystem (3) verbundene Restbus-Steuergeräte (2a, 2b) umfasst und der Restbus-Steuergeräteverbund (2) mit wenigstens einem weiteren Steuergerät (4) über das Bussystem (3) verbunden ist, wobei die Kommunikationsbeziehungen der Restbus-Steuergeräte (2a, 2b) beschrieben werden, auf Grundlage der Kommunikationsbeziehungen Programmcode (5, 5a, 5b) zur Simulation der Restbus-Steuergeräte (2a, 2b) erzeugt wird und der Restbus-Steuergeräteverbund (2) mittels einer ausführbaren Fassung des Programmcodes (5) auf einem Simulationsrechner (6, 6a, 6b) simuliert wird.

Eine vereinfachte und flexible Simulation des Restbus-Steuergeräteverbundes (2) wird ermöglicht, indem für die Restbus-Steuergeräte (2a, 2b) ein einziges gemeinsames Restbus-Steuergerätemodell als Programmcode (5) zur Simulation der Restbus-Steuergeräte (2a, 2b) generiert wird.

## Beschreibung

Die Erfindung betrifft ein computerimplementiertes Verfahren zur Simulation eines Restbus-Steuergeräteverbundes, wobei der Restbus-Steuergeräteverbund mindestens zwei über ein Bussystem verbundene Restbus-Steuergeräte umfasst und der Restbus-Steuergeräteverbund mit wenigstens einem weiteren Steuergerät über das Bussystem verbunden ist, wobei die Kommunikationsbeziehungen der Restbus-Steuergeräte beschrieben werden, auf Grundlage der Kommunikationsbeziehungen Programmcode zur Simulation der Restbus-Steuergeräte erzeugt wird und der Restbus-Steuergeräteverbund mittels einer ausführbaren Fassung des Programmcodes auf einem Simulationsrechner simuliert wird.

erfahren der vorgenannten Art sind im Stand der Technik bekannt, sie werden häufig im Bereich des Tests von realen Steuergeräten eingesetzt, die Bestandteil eines Steuergeräteverbunds sind bzw. Bestandteil eines Steuergeräteverbundes sein sollen. Unter Steuergeräten werden zumeist Kleinrechner mit wenigstens einer I/O-Schnittstelle (I/O = Input/Output) verstanden, die oft mit einem echtzeitfähigen Betriebssystem ausgestattet sind, das die Realisierung - auch komplexer - zumeist regelungstechnischer Aufgaben auf dem Steuergerät gestattet. Die Steuergeräte-Entwicklung ist zentraler Bestandteil der technischen Entwicklung von umfangreichen gerätetechnischen Anlagen, wie sie aus der industriellen Praxis bekannt sind. Über ein Bussystem (z. B. CAN, FlexRay, LIN) zu einem verteilten Netz von Kleinrechnern verbundene Steuergeräte sind Standardanwendungen beispielsweise im automotiven Bereich und in der Luft- und Raumfahrt.

Der Test eines im Endprodukt zum Einsatz kommenden (Serien-)Steuergeräts ist der Endpunkt einer Mehrzahl vorgelagerter Entwicklungsschritte einer auf dem Steuergerät zu implementierenden Regelung oder Steuerung, wobei diese Entwicklungsschritte üblicherweise mit dem sogenannten V-Modell oder auch V-Zyklus beschrieben werden. Am Anfang der für die Funktion vieler technischer Anlagen essenziellen Reglerentwicklung steht die mathematische Modellierung des Regelungsalgorithmus auf einem Rechner mit einer mathematisch-graphischen Modellierungsumgebung, wobei der Regler als Bestandteil des Steuergeräts aufzufassen ist. Zusätzlich wird auch die Umgebung des Steuergeräts mathematisch modelliert, da die Interaktion des Reglers auf dem Steuergerät mit dem zu steuernden Prozess von Interesse ist. Bei diesen funktionalen mathematischen Betrachtungen ist eine Simulation in Echtzeit meist nicht erforderlich (Offline-Simulation).

Im nächsten Schritt wird der zuvor entworfene Regelungsalgorithmus mit Hilfe des Rapid-Control-Prototyping auf eine leistungsfähige, meist echtzeitfähige Hardware übertragen, die über geeignete I/O-Schnittstellen mit dem tatsächlichen physikalischen Prozess verbunden ist, also beispielsweise mit einem Kraftfahrzeug-Motor. Diese echtzeitfähige Hardware hat mit dem später zum Einsatz kommenden Serien-Steuergerät im Regelfall nichts zu tun, es geht hier um den Nachweis der prinzipiellen Funktionsfähigkeit der zuvor entworfenen Regelung in der Praxis.

In einem weiteren Schritt wird im Rahmen der automatischen Seriencodegenerierung die Regelung auf dem später im Serien-Steuergerät wahrscheinlich tatsächlich zum Einsatz kommenden Zielprozessor implementiert. Die Zielhardware nähert sich demnach in diesem Schritt dem Serien-Steuergerät an, ist mit dem Serien-Steuergerät aber nicht identisch.

In einem weiteren Schritt wird das üblicherweise erst in einem späten Entwicklungsstadium vorhandene Serien-Steuergerät im Rahmen eines Hardware-inthe-Loop-Tests (HIL) überprüft. Dies ist der wesentliche Anwendungsfall für das eingangs beschriebene Verfahren zur Simulation eines Restbus-Steuergeräteverbundes. Das in diesem Schritt physikalisch vorhandene (Serien-)Steuergerät wird hier mittels seiner physikalischen Steuergeräteschnittstelle mit einem leistungsfähigen Simulationsrechner, oft einfach als Simulator bezeichnet, verbunden. Der Simulator simuliert die benötigten Größen des zu testenden realen Steuergeräts und tauscht Ein- und Ausgangsgrößen mit dem Steuergerät aus. Die Pins der physikalischen Steuergeräte-Schnittstelle des Steuergeräts sind über einen Kabelbaum mit dem Simulator verbunden. So ist es möglich, in der Simulationsumgebung alle benötigten Größen, beispielsweise eines Kraftfahrzeug-Motors - gegebenenfalls das gesamte Kraftfahrzeug mit Motor, Antriebstrang, Fahrwerk und Fahrstrecke -, zu simulieren und das Verhalten des Steuergeräts im Zusammenspiel mit der Simulationsumgebung gefahrlos zu überprüfen.

In den hier betrachteten Anwendungsfällen ist das zu testende Steuergerät über ein Bussystem mit anderen Steuergeräten verbunden, wobei diese anderen Steuergeräte den Restbus-Steuergeräteverbund bilden. Wenn der Restbus-Steuergeräteverbund (noch) nicht real vorhanden ist, müssen zum Test des weiteren Steuergeräts, das als reales Gerät vorliegt, die Steuergeräte des Restbus-Steuergeräteverbundes auf dem Simulationsrechner simuliert werden. Dazu ist es erforderlich, die Kommunikationsbeziehungen der Restbus-Steuergeräte zu erfassen und zu beschreiben. Auf Grundlage der Kommunikationsbeziehungen kann dann Programmcode zur Simulation der Restbus-Steuergeräte generiert werden, wobei es sich häufig um Code in einer höheren Programmiersprache handelt (z. B. "C" oder "C++"). Dieser Programmcode wird dann häufig mit einem für den Simulationsrechner geeigneten Compiler in eine ausführbare Fassung des Programmcodes übertragen und auf dem Simulationsrechner ausgeführt.

Je nach Komplexität des Restbus-Steuergeräteverbundes ist die Simulation der Steuergeräte des Restbus-Steuergeräteverbundes im Stand der Technik mit einem erheblichen Aufwand verbunden, und zwar sowohl mit einem erheblichen gerätetechnischen wie auch mit einem erheblichen softwaremäßigen Aufwand. Eine bekannte Vorgehensweise besteht darin, die Restbus-Steuergeräte des Restbus-Steuergeräteverbundes separat zu simulieren. Dazu werden Software-Komponenten der Restbus-Steuergeräte (Runtime-Environment, Systemdienste, Kommunikationsdienste, I/O-Hardware-Abstraktionsschicht usw.) je nach Abstraktionsgrad - zumindest teilweise - im Rahmen eines sogenannten virtuellen Steuergeräts nachgebildet und mit einem Simulator simuliert (dSPACE Catalog 2014: "SystemDesk V-ECU Generation Module" und "dSPACE Offline Simulator").

Bei dem Simulator kann es sich um einen oder mehrere spezialisierte Rechner handeln, beispielsweise in Form eines HIL-Teststandes, als Simulator kann aber auch ein handelsüblicher PC zum Einsatz kommen. Jedes Restbus-Steuergerät wird separat nachgebildet und auf einer separaten Hardware-Recheneinheit simuliert, also auf einem eigenen Simulationsboard, einem eigenen Prozessor oder jedenfalls einem eigenen Kern eines Prozessors innerhalb des Simulationsrechners.

Aufgabe der vorliegenden Erfindung ist es daher, das eingangs genannte Verfahren zur Simulation eines Restbus-Steuergeräteverbundes so weiterzuentwickeln, sodass die Simulation des Restbus-Steuergeräteverbundes vereinfacht und flexibler möglich ist.

Die zuvor hergeleitete und aufgezeigte Aufgabe ist bei dem Verfahren zur Simulation eines Restbus-Steuergeräteverbundes, von dem die Erfindung ausgeht, dadurch gelöst, dass für die Restbus-Steuergeräte ein einziges gemeinsames Restbus-Steuergerätemodell als Programmcode zur Simulation der Restbus-Steuergeräte generiert wird. Vorteilhaft an dem erfindungsgemäßen Verfahren ist, dass nunmehr auch eine gegenüber dem Stand der Technik vereinfachte Restbus-Simulation möglich ist, bei der die Gesamtheit der Restbus-Steuergeräte gemeinsam simuliert werden kann, da ihr ein einziges gemeinsames Restbus-Steuergerätemodell zugrunde liegt.

Die zwischen den Restbus-Steuergeräten ausgetauschten Nachrichten müssen demnach nicht mehr über externe Schnittstellen außerhalb des gemeinsamen Restbus-Steuergerätemodells ausgetauscht werden, sondern können innerhalb des Restbus-Steuergerätemodells ausgetauscht werden. Das Restbus-Steuergerätemodell muss nach außen nur noch diejenigen Nachrichten ausgeben, die für das weitere Steuergerät, das über das Bussystem mit den simulierten Restbus-Steuergeräten verbunden ist, relevant sind. Es ist nun erheblich einfacher möglich, zu der Simulation des Restbus-Steuergeräteverbundes zu gelangen, als dies zuvor möglich gewesen ist.

Bei den hier betrachteten Anwendungsfällen der Simulation des Restbus-Steuergeräteverbundes auf einem Simulationsrechner ist der Simulationsrechner üblicherweise mit einem realen technischen Prozess verbunden, zumindest nämlich mit dem weiteren (realen) Steuergerät. Die im Rahmen der Ausführung des Programmcodes des einziges gemeinsames Restbus-Steuergerätemodells erzeugten Daten betreffen natürlich auch Daten, die über entsprechende I/O-Schnittstellen auf das Bussystem übertragen werden und so den angeschlossenen realen technischen Prozess - zumindest in Form des angeschlossenen weiteren Steuergeräts - physikalisch beeinflussen.

In einer bevorzugten Ausgestaltung des Verfahrens ist vorgesehen, dass die Beschreibung der Kommunikationsbeziehungen der Restbus-Steuergeräte durch Angabe einer Kommunikationsmatrix erfolgt, die die Restbus-Steuergeräte und die zwischen den Restbus-Steuergeräten ausgetauschten Kommunikationselemente umfasst. Dabei handelt es sich um eine Beschreibung der Kommunikationselemente, beispielsweise in Form von PDUs (Protocoll Data Units), die zwischen den Kommunikationspartnern des Restbus-Steuergeräteverbundes, also zwischen den Restbus-Steuergeräten, ausgetauscht werden.

Gemäß einer bevorzugten Weiterentwicklung des Simulationsverfahrens ist vorgesehen, dass die Restbus-Steuergeräte in einer ausführbaren Fassung des Restbus-Steuergerätemodells gemeinsam simuliert werden, insbesondere in einem einzigen Prozess auf dem Simulationsrechner simuliert werden. Diese Variante verdeutlicht nochmals den enormen Vorteil des Verfahrens, durch das es überhaupt möglich wird, alle Restbus-Steuergeräte auf dem Simulationsrechner in einem einzigen Prozess zu berechnen.

Eine vorteilhafte Weiterentwicklung des Verfahrens zeichnet sich dadurch aus, dass das gemeinsame Restbus-Steuergerätemodell als ein virtuelles Steuergerät generiert wird. Dadurch ist es möglich, den Restbus-Steuergeräteverbund auf solchen Simulationsumgebungen, die mit den eingangs beschriebenen virtuellen Steuergeräten arbeiten (V-ECU Implementierungen), nur mittels eines einzigen virtuellen Steuergeräts zu simulieren. Bei der üblichen Vorgehensweise, zur Simulation eines virtuellen Steuergeräts eine eigenständige Recheneinheit des Simulationsrechners zu verwenden, wird damit automatisch der gesamte Restbus-Steuergeräteverbund auf einer einzigen Recheneinheit simuliert.

Bei einer weiteren Ausgestaltung des Verfahrens ist vorgesehen, dass das Restbus-Steuergerätemodell als eine Functional Mock-Up Unit (FMU) generiert wird, die insbesondere ein Functional Mock-Up Interface (FMI) aufweist. Hier kommt es nicht unbedingt auf die exakte Abbildung der Restbus-Steuergeräte innerhalb des gemeinsamen Restbus-Steuergerätemodells an, wichtig ist, dass die Functional Mock-Up Unit eine Schnittstelle aufweist, die die Verwendung in einer anderen Modellierungs- bzw. Simulationsumgebung oder die Kopplung verschiedener Modellierungs- bzw. Simulationsumgebungen gestattet. So ist möglich, in einer beliebigen Modellierungs- bzw. Simulationsumgebung eine Restbus-Simulation durchzuführen, bei der eine Kommunikation auf einem simulierten oder einem realen Bussystem erfolgt. Die Generierung der Functional Mock-Up Unit sieht dabei vor, dass beispielsweise ein Restbus-Block (im Falle einer blockbasierten Modellierungsumgebung) der Modellierungs- bzw. Simulationsumgebung mit entsprechenden Informationen ausgestattet wird, wobei die richtige Abbildung der Busschnittstelle von besonderer Wichtigkeit ist. Die Generierung der Functional Mock-Up Unit und des Functional Mock-Up Interface basiert vorzugsweise auf dem FMI/FMU-Standard (siehe hierzu www.fmi-standard.org).

In einer Weiterentwicklung des Verfahrens ist vorgesehen, dass das Restbus-Steuergerätemodell für eine offline-Simulationsumgebung generiert wird, beispielsweise als ein Simulink-Modell oder als Dateicontainer zusammen mit einem Umgebungsmodell (z.B. ein Simulink-Modell oder ein daraus generierter Programmcode) und/oder Beschreibungen von Programmschnittstellen des Dateicontainers bzw. des Restbus-Steuergerätemodells.

Eine Ausgestaltung des Verfahrens sieht vor, dass zumindest Teile des Restbus-Steuergerätemodells den Automotive Open System Architecture Standard (AUTOSAR) erfüllen.

Eine weitere Ausgestaltung des Verfahrens sieht vor, dass die Restbus-Steuergeräte in dem gemeinsamen Restbus-Steuergerätemodell jeweils durch plattform-unabhängigen Programmcode ohne Programmcode für die Busschnittstelle abgebildet werden und die plattform-unabhängigen Anteile der Busschnittstelle der Restbus-Steuergeräte in einem gemeinsamen Schnittstellen-Programmcode abgebildet werden, wobei der gemeinsame Schnittstellen-Programmcode die spezifisch konfigurierten Busschnittstellen aller Restbus-Steuergeräte beschreibt. Im Ergebnis bedeutet das, dass für alle Restbus-Steuergeräte des Restbus-Steuergeräteverbundes eine Obermengen-Schnittstelle erzeugt wird, über die die gesamte Kommunikation des Restbus-Steuergeräteverbundes mit der Umgebung abgewickelt wird.

Bei einer zu der vorgenannten Ausgestaltung des Verfahrens alternativen Ausgestaltung ist vorgesehen, dass die Restbus-Steuergeräte in dem gemeinsamen Restbus-Steuergerätemodell jeweils durch plattform-unabhängigen Programmcode mit dem Anteil der jeweiligen Busschnittstelle abgebildet werden, sodass der plattform-unabhängige Programmcode die spezifisch konfigurierte Busschnittstelle des jeweiligen Restbus-Steuergeräts beschreibt. Jedes Restbus-Steuergerät verfügt daher über eine eigene Implementierung der jeweils verwendeten Busschnittstelle.

Der plattform-unabhängige Programmcode kann dann auf verhältnismäßig einfache Weise gewonnen werden, wenn der Echtzeit-Simulationscode aus einer Hardware-Konfiguration und einer Restbus-Konfiguration einer HIL-Applikation schon vorliegt. Dann kann der hardware-unabhängigen Programmcode des Restbus-Steuergeräteverbundes oberhalb des Schnittstellen-Programmcodes durch Extraktion aus dem Applikationscode der HIL-Anwendung erhalten werden.

Vorzugsweise wird der Programmcode des gemeinsamen Restbus-Steuergerätemodells mit einer Manipulationsschnittstelle ausgestattet, über die verschiedene Fehler innerhalb des Restbus-Steuergeräteverbundes ausgelöst werden. Damit ist eine gezielte Fehlereinstreuung (Failure Injection) und Fehlersimulation innerhalb des Restbusverbundes möglich.

Bei einer letzten Weiterentwicklung des Verfahrens ist vorgesehen, dass das Restbus-Steuergerätemodell als ein Daten-Container abgelegt wird, aufweisend den Programmcode für die Restbus-Steuergeräte, wenigstens eine Parameterdatei, insbesondere auch Programmcode eines Streckenmodells, mit dem die Restbus-Steuergeräte verbunden sind. Die Parameterdatei kann dabei z.B. eine Schnittstellenbeschreibung und/oder eine Variablenbeschreibung für den Zugriff auf globale Variablen während einer Simulation, z.B. in Form von A2L- oder TRC-Formaten, umfassen.

Mit dem zuvor beschriebenen Verfahren ist es im Ergebnis möglich, nicht nur einen Restbus-Steuergeräteverbund zu simulieren, sondern auch ein Modell zur Simulation eines Restbus-Steuergeräteverbundes zu erzeugen, wobei der Restbus-Steuergeräteverbund mindestens zwei über ein Bussystem verbundene Restbus-Steuergeräte umfasst und der Restbus-Steuergeräteverbund mit wenigstens einem weiteren Steuergerät über das Bussystem verbunden ist, wobei die Kommunikationsbeziehungen der Restbus-Steuergeräte beschrieben werden und für die Restbus-Steuergeräte ein einziges gemeinsames Restbus-Steuergerätemodell als Programmcode zur Simulation der Restbus-Steuergeräte generiert wird, sodass die Restbus-Steuergeräte in einer ausführbaren Fassung des Restbus-Steuergerätemodells gemeinsam simuliert werden.

Die Erfindung betrifft ferner ein Computerprogrammprodukt mit einem Computerprogramm, das Softwaremittel zur Durchführung des zuvor beschriebenen Verfahrens zur Simulation eines Restbus-Steuergeräteverbundes, wenn das Computerprogramm in einem Computer ausgeführt wird.

Im Einzelnen gibt es nun eine Vielzahl von Möglichkeiten, das erfindungsgemäße Verfahren auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig.1: ein computerimplementiertes Verfahren zur Simulation eines Restbus-Steuergeräteverbundes, wie es aus dem Stand der Technik bekannt ist,
- Fig. 2: ein erfindungsgemäßes Verfahren zur Simulation eines Restbus-Steuergeräteverbundes,
- Fig. 3: ein computerimplementiertes Verfahren, bei dem das Restbus-Steuergerätemodell als eine Functional Mock-Up Unit ausgestaltet ist,
- Fig. 4: ein computerimplementiertes Verfahren, bei dem die Funktionalität der Busschnittstelle in einem gemeinsamen Schnittstellen-Programmcode abgebildet wird und
- Fig. 5: ein computerimplementiertes Verfahren, bei dem der Programmcode für die Restbus-Steuergeräte den Anteil der jeweiligen Busschnittstelle umfasst.

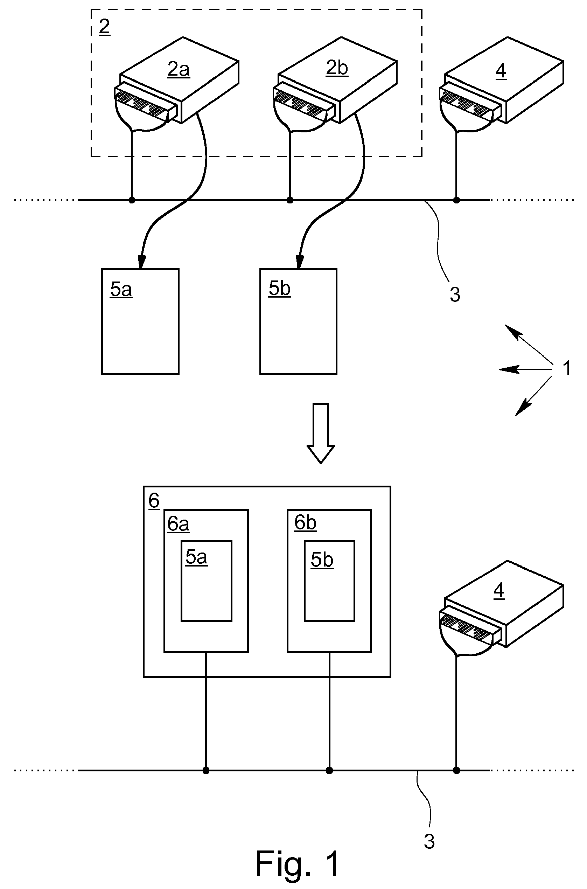

In Fig. 1 ist zunächst ein computerimplementiertes Verfahren 1 zur Simulation eines Restbus-Steuergeräteverbundes 2 dargestellt, wie es schon im Stand der Technik praktiziert wird. In Fig. 1 ist oben zunächst dargestellt ein Steuergeräteverbund mit insgesamt drei Steuergeräten 2a, 2b und 4, die über ein Bussystem 3 miteinander in Verbindung stehen.

Im vorliegenden Fall besteht die ingenieurmäßige Aufgabe darin, dass das Steuergerät 4 als reales Steuergerät vorliegt und hinsichtlich seiner Funktionalität im Wechselspiel mit den anderen Steuergeräten 2a, 2b getestet werden soll. Wenn die Steuergeräte 2a, 2b - aus welchem Grund auch immer - real nicht vorliegen, werden diese Steuergeräte 2a, 2b simuliert. Aus Sicht des zu testenden Steuergeräts 4 bilden die beiden Steuergeräte 2a, 2b insgesamt den Restbus-Steuergeräteverbund 2. Wenn die Funktionalität der Restbus-Steuergeräte 2a, 2b bekannt ist, können auch die Kommunikationsbeziehungen der Restbus-Steuergeräte 2a, 2b beschrieben werden. Auf Grundlage der Kommunikationsbeziehungen wird dann ein Programmcode 5a, 5b zur Simulation der Restbus-Steuergeräte 2a, 2b erzeugt.

In Fig. 1 ist unten zu sehen, dass der Restbus-Steuergeräteverbund 2 mittels einer ausführbaren Fassung des Programmcodes 5a, 5b auf einem Simulationsrechner 6 simuliert wird. Bei dem hier nur schematisch dargestellten Simulationsrechner 6 handelt es sich um einen HIL-Teststand. Es ist üblicherweise so, dass für jedes der Restbus-Steuergeräte 2a, 2b ein separater Programmcode 5a, 5b erzeugt wird und dieser Programmcode 5a, 5b auf verschiedenen Einheiten 6a, 6b des Simulationsrechners 6 separat ausgeführt wird. Hier handelt es sich bei den Simulationsrechnereinheiten 6a, 6b um separate Einschubkarten innerhalb des HIL-Simulators 6, die jeweils über einen eigenen Prozessor und eigene I/O-Schnittstellen verfügen, über die sie mit dem Bussystem 3 verbunden sind. Im dargestellten Ausführungsbeispiel sind die Restbus-Steuergeräte 2a, 2b als separate virtuelle Steuergeräte (V-ECU) realisiert.

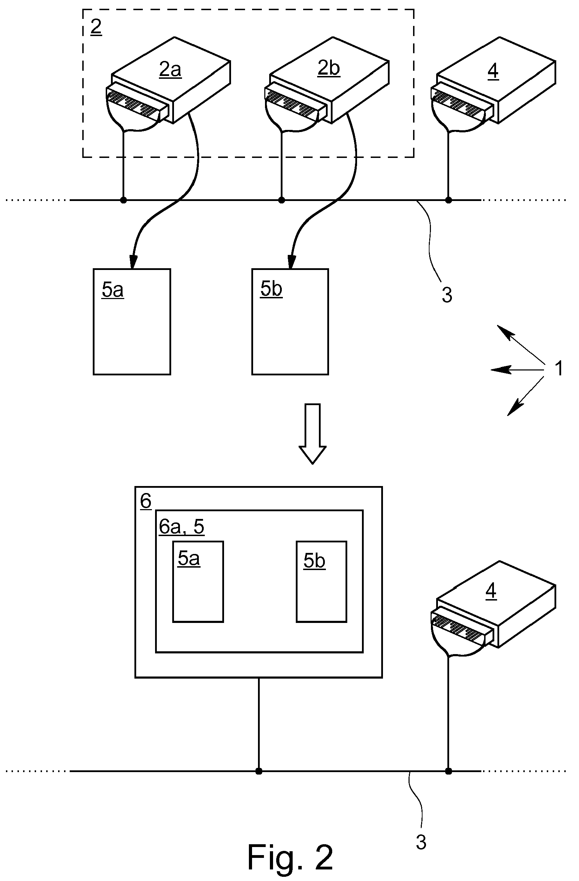

In Fig. 2 ist dargestellt, dass für die Restbus-Steuergeräte 2a, 2b nur ein einziges gemeinsames Restbus-Steuergerätemodell als Programmcode 5 zur Simulation der Restbus-Steuergeräte 2a, 2b generiert wird. Der ganzheitliche Programmcode 5 mag Codebereiche 5a, 5b aufweisen, die in unmittelbarem Zusammenhang mit der Funktionalität der Restbus-Steuergeräte 2a, 2b stehen, jedoch ist die Funktionalität aller Restbus-Steuergeräte 2a, 2b in dem einzigen Programmcode 5 abgebildet, der als ein ganzheitlicher Programmcode 5 ausführbar ist und ausgeführt wird.

Vorteilhaft an dem dargestellten Verfahren ist, dass eine gegenüber dem Verfahren gemäß Fig. 1 vereinfachte Restbus-Simulation möglich ist, bei der die Gesamtheit der Restbus-Steuergeräte 2a, 2b gemeinsam simuliert werden kann, da ihr ein einziges gemeinsames Restbus-Steuergerätemodell bzw. ein einziger gemeinsamer Programmcode 5 zugrunde liegt. Die zwischen den Restbus-Steuergeräten 2a, 2b ausgetauschten Nachrichten können innerhalb des Restbus-Steuergerätemodells bzw. innerhalb des darauf beruhenden Programmcodes 5 ausgetauscht werden. Das Restbus-Steuergerätemodell und der darauf beruhende Programmcode 5 müssen nach außen, z. B. als Reaktion auf den Empfang von Daten vom weiteren Steuergerät 4, nur noch die für das weitere Steuergerät 4 interessierenden Daten ausgeben. Auf diese Weise ist es sehr einfach möglich, die Simulation des Restbus-Steuergeräteverbundes 2 zu implementieren.

Darüber hinaus sind auch nicht mehrere Rechnereinheiten 6a, 6b auf dem Simulationsrechner 6 erforderlich zur Simulation des Restbus-Steuergeräteverbundes 2, es ist vielmehr das Vorhandensein einer einzigen Recheneinheit 6a oder 6b im Simulationsrechner 6 erforderlich, um den gesamten Restbus-Steuergeräteverbund 2 zu simulieren; dies ist ebenfalls in Fig. 2 gezeigt.

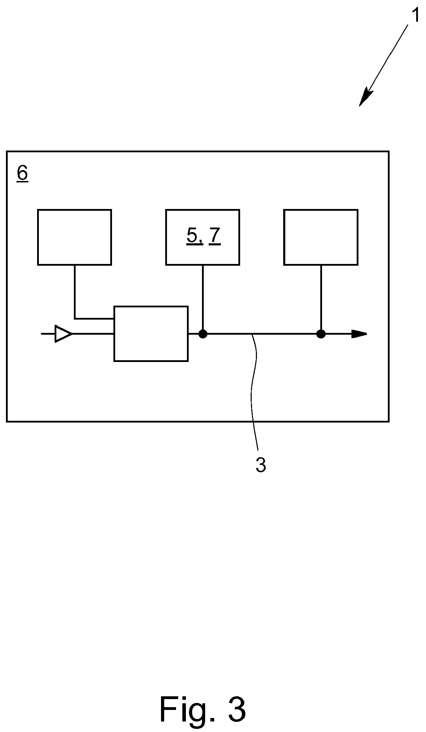

Die Erzeugung eines einzigen gemeinsamen Restbus-Steuergerätemodells als Programmcode 5 für die Restbus-Steuergeräte 2a, 2b hat zur Folge, dass die Restbus-Steuergeräte 2a, 2b bei Ausführung auf dem Simulationsrechner 6 bzw. auf der Simulationsrechnereinheit 6a gemeinsam simuliert werden. Vorliegend werden die Restbus-Steuergeräte 2a, 2b im Rahmen der Ausführung des Programmcodes 5 auf der Rechnereinheit 6a des Simulationsrechners 6 in einem einzigen Prozess simuliert. Mit dem vorgestellten Verfahren ist es damit möglich, dass der gesamte Restbus-Steuergeräteverbund 2 und das damit im Zusammenhang stehende gemeinsame Restbus-Steuergerätemodell als ein einziges virtuelles Steuergerät generiert und - wie in Fig. 2 - durch ein einziges virtuelles Steuergerät ausgeführt und simuliert wird. Durch das hier vorgestellte Verfahren zur Simulation eines Restbus-Steuergeräteverbundes 2 sind noch weitergehende Möglichkeiten eröffnet, die eine einfache Handhabung eines ganzen Restbus-Steuergeräteverbundes 2 auch in einem anderen Simulationskontext erlauben. In Fig. 3 ist gezeigt, dass der Restbus-Steuergeräteverbund 2 und damit das zugehörige Restbus-Steuergerätemodell als eine Functional Mock-Up Unit 7 generiert werden und im Rahmen einer anderen Simulationsumgebung auf einem Simulationsrechner 6 simuliert werden. Im vorliegenden Fall handelt es sich bei dem Simulationsrechner 6 um einen herkömmlichen PC, auf dem eine blockbasierte Simulationsumgebung betrieben wird, was durch das schematisch dargestellte Blockschaltbild angedeutet ist.

Der Programmcode 5 für den Restbus-Steuergeräteverbund 2 wird in der dargestellten blockbasierten Modellierungsumgebung für einen Restbus-Block hinterlegt. Hier handelt es sich bei der Simulationsumgebung um eine Offline-Simulationsumgebung, bei der die Simulation des Restbus-Steuergeräteverbundes 2 nicht zwingend in Echtzeit erfolgen muss. Der Vorteil einer insgesamt vereinfachten Darstellung und simulationstechnischen Implementierung des Restbus-Steuergeräteverbundes 2 durch den Programmcode 5 eines einzigen gemeinsamen Restbus-Steuergerätemodells bleibt jedoch auch hier erhalten.

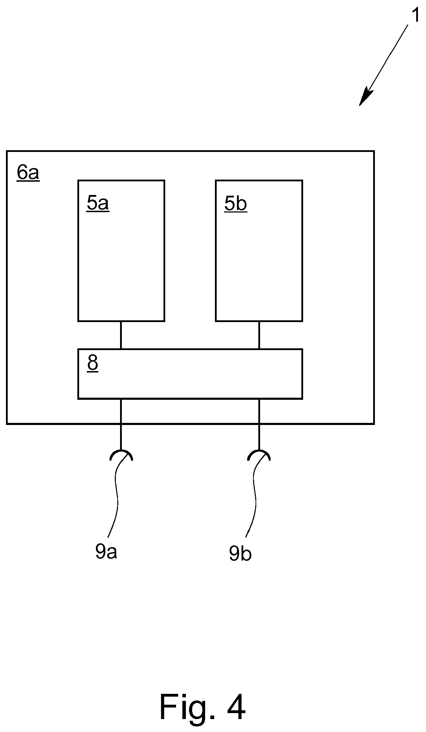

Fig. 4 zeigt eine besondere Ausgestaltung des zuvor beschriebenen Verfahrens zur Simulation eines Restbus-Steuergeräteverbundes 2. Von Bedeutung ist hier, dass die Restbus-Steuergeräte 2a, 2b in dem gemeinsamen Restbus-Steuergerätemodell jeweils durch plattform-unabhängigen Programmcode 5a, 5b abgebildet werden, wobei der Programmcode 5a, 5b keinen Programmcode für die Busschnittstelle enthält. Die plattform-unabhängigen Anteile der Busschnittstelle der Restbus-Steuergeräte 2a, 2b wird dann in einem gemeinsamen Schnittstelle-Programmcode 8 abgebildet, wobei der gemeinsame Schnittstellen-Programmcode 8 die spezifisch konfigurierten Busschnittstellen der Restbus-Steuergeräte 2a, 2b beschreibt. Der Schnittstellen-Programmcode 8 stellt damit also ein Obermengen-Interface für alle Restbus-Steuergeräte 2a, 2b dar. Die angedeuteten Schnittstellen 9a, 9b stellen dann Schnittstellen zu einem externen Businterface dar sowie zu dem Betriebssystem des Simulationsrechners 6 bzw. der Recheneinheit 6a des Simulationsrechners 6.

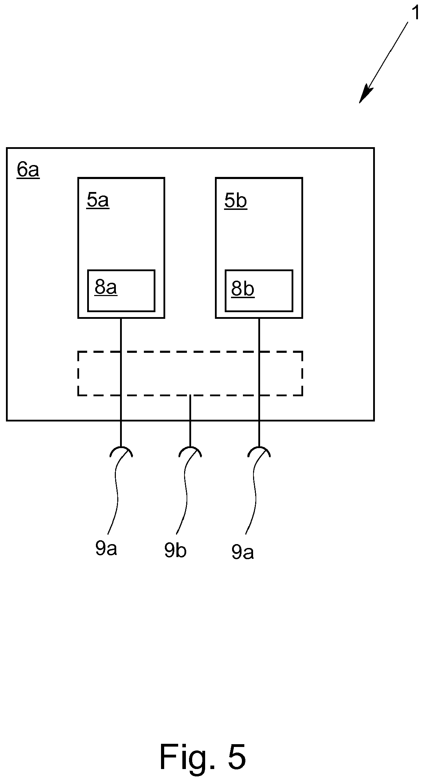

Fig. 5 zeigt eine alternative Variante zur Umsetzung der Busschnittstellen der Restbus-Steuergeräte 2a, 2b gegenüber der Ausgestaltung in Fig. 4. Hier sind die Restbus-Steuergeräte 2a, 2b in dem gemeinsamen Restbus-Steuergerätemodell jeweils durch plattform-unabhängigen Programmcode 5a, 5b mit dem Anteil der jeweiligen Busschnittstelle 8a, 8b abgebildet, so dass der plattform-unabhängige Programmcode 5a, 5b, 8a, 8b die spezifisch konfigurierte Busschnittstelle des jeweiligen Restbus-Steuergeräts 2a, 2b beschreibt. Der Programmcode für die Busschnittstelle 8a, 8b ist hier demnach in der Restbus-Implementierung integriert. Der plattform-unabhängige Programmcode 5a, 5b jedes einzelnen Restbus-Steuergeräts 2a, 2b kann daher über die angedeutete Schnittstelle 9a separat mit dem externen und hier nicht dargestellten Bussystem in Verbindung treten. Ferner ist wiederum eine Schnittstelle 9b für die Interaktion mit dem Betriebssystem des Simulationsrechners 6 bzw. der Rechnereinheit 6a des Simulationsrechners 6 vorgesehen.

## Patentansprüche

1. Computerimplementiertes Verfahren (1) zur Simulation eines Restbus-Steuergeräteverbundes (2), wobei der Restbus-Steuergeräteverbund (2) mindestens zwei über ein Bussystem (3) verbundene Restbus-Steuergeräte (2a, 2b) umfasst und der Restbus-Steuergeräteverbund (2) mit wenigstens einem weiteren Steuergerät (4) über das Bussystem (3) verbunden ist, wobei die Kommunikationsbeziehungen der Restbus-Steuergeräte (2a, 2b) beschrieben werden, auf Grundlage der Kommunikationsbeziehungen Programmcode (5, 5a, 5b) zur Simulation der Restbus-Steuergeräte (2a, 2b) erzeugt wird und der Restbus-Steuergeräteverbund (2) mittels einer ausführbaren Fassung des Programmcodes (5) auf einem Simulationsrechner (6, 6a, 6b) simuliert wird,
**dadurch gekennzeichnet,**
**dass** für die Restbus-Steuergeräte (2a, 2b) ein einziges gemeinsames Restbus-Steuergerätemodell als Programmcode (5) zur Simulation der Restbus-Steuergeräte (2a, 2b) generiert wird.

2. Computerimplementiertes Verfahren (1) nach Anspruch 1, **dadurch gekennzeichnet, dass** die Beschreibung der Kommunikationsbeziehungen der Restbus-Steuergeräte (2a, 2b) erfolgt durch Angabe einer Kommunikationsmatrix, die die Restbus-Steuergeräte (2a, 2b) und die zwischen den Restbus-Steuergeräten (2a, 2b) ausgetauschten Kommunikationselemente umfasst.

3. Computerimplementiertes Verfahren (1) nach Anspruch 1 oder 2, **dadurch gekennzeichnet, dass** die Restbus-Steuergeräte (2a, 2b) in einer ausführbaren Fassung des Restbus-Steuergerätemodells gemeinsam simuliert werden, insbesondere in einem einzigen Prozess auf dem Simulationsrechner (6) simuliert werden.

4. Computerimplementiertes Verfahren (1) nach einem der Ansprüche 1 bis 3, **dadurch gekennzeichnet, dass** das gemeinsame Restbus-Steuergerätemodell als ein virtuelles Steuergerät generiert wird.

5. Computerimplementiertes Verfahren (1) nach einem der Ansprüche 1 bis 3, **dadurch gekennzeichnet, dass** das Restbus-Steuergerätemodell als eine Functional Mock-Up Unit (7, FMU) generiert wird, die insbesondere ein Functional Mock-Up Interface (FMI) aufweist.

6. Computerimplementiertes Verfahren (1) nach einem der Ansprüche 1 bis 3, **dadurch gekennzeichnet, dass** das Restbus-Steuergerätemodell für eine offline-Simulationsumgebung generiert wird, insbesondere als ein Simulink-Modell in Form eines Simulink Implementation Containers (SIC).

7. Computerimplementiertes Verfahren (1) nach einem der Ansprüche 1 bis 6, **dadurch gekennzeichnet, dass** zumindest Teile des Restbus-Steuergerätemodells den Automotive Open System Architecture Standard (AUTOSAR) erfüllen.

8. Computerimplementiertes Verfahren (1) nach einem der Ansprüche 1 bis 7, **dadurch gekennzeichnet, dass** die Restbus-Steuergeräte (2a, 2b) in dem gemeinsamen Restbus-Steuergerätemodell jeweils durch plattform-unabhängigen Programmcode (5a, 5b) ohne Programmcode für die Busschnittstelle abgebildet werden und die plattform-unabhängigen Anteile der Busschnittstelle der Restbus-Steuergeräte (2a, 2b) in einem gemeinsamen Schnittstellen-Programmcode (8) abgebildet werden, wobei der gemeinsame Schnittstellen-Programmcode (8) die spezifisch konfigurierten Busschnittstellen aller Restbus-Steuergeräte (2a, 2b) beschreibt.

9. Computerimplementiertes Verfahren (1) nach einem der Ansprüche 1 bis 7, **dadurch gekennzeichnet, dass** die Restbus-Steuergeräte (2a, 2b) in dem gemeinsamen Restbus-Steuergerätemodell jeweils durch plattform-unabhängigen Programmcode (5a, 5b) mit dem Anteil der jeweiligen Busschnittstelle (8a, 8b) abgebildet werden, sodass der plattform-unabhängige Programmcode (5a, 5b, 8a, 8b) die spezifisch konfigurierte Busschnittstelle des jeweiligen Restbus-Steuergeräts (2a, 2b) beschreibt.

10. Computerimplementiertes Verfahren nach einem der Ansprüche 1 bis 9, **dadurch gekennzeichnet, dass** der Programmcode des gemeinsame Restbus-Steuergerätemodells mit einer Manipulationsschnittstelle ausgestattet wird, über die verschiedene Fehler innerhalb des Restbus-Steuergeräteverbundes ausgelöst werden.

11. Computerimplementiertes Verfahren nach einem der Ansprüche 1 bis 10, **dadurch gekennzeichnet, dass** das Restbus-Steuergerätemodell als ein Daten-Container abgelegt wird, aufweisend den Programmcode für die Restbus-Steuergeräte, wenigstens eine Parameterdatei, insbesondere auch Programmcode eines Streckenmodells, mit dem die Restbus-Steuergeräte verbunden sind.

12. Computerprogrammprodukt mit einem Computerprogramm, das Softwaremittel zur Durchführung eines Verfahrens nach einem der Ansprüche 1 bis 11 aufweist, wenn das Computerprogramm in einem Computer ausgeführt wird.
